# FASCICULE DE BREVET EUROPEEN

(11) **EP 1 058 627 B1**
(45) Date de publication et mention de la délivrance du brevet: **24.04.2002**
(21) Numéro de dépôt: 99901636.3
(22) Date de dépôt: 28.01.1999
(51) Int. Cl.: B60K 15/077

(54) **DISPOSITIF ANTIBRUIT POUR RESERVOIR A CARBURANT DE VEHICULE, NOTAMMENT AUTOMOBILE**
VORRICHTUNG ZUR GERÄUSCHMINDERUNG FÜR DEN KRAFTSTOFFTANK EINES FAHRZEUGES, INSBESONDERE EINES KRAFTFAHRZEUGES
ANTINOISE DEVICE FOR VEHICLE, PARTICULARLY MOTOR VEHICLE, FUEL TANK

(30) Priorité: 25.02.1998 FR 9802254
(43) Date de publication de la demande: 13.12.2000
(73) Titulaire: AUTOMOBILES PEUGEOT, 75116 Paris (FR); AUTOMOBILES CITROEN, 92200 Neuilly-sur-Seine (FR)
(72) Inventeur: BOGUET, Jean, Louis, F-78570 Andrésy (FR); SALLIOT, Didier, F-78260 Achères (FR)
(74) Mandataire: De Cuenca, Emmanuel Jaime
(86) Numéro de dépôt international: FR9900159
(87) Numéro de publication internationale: WO9943510

(56) Documents cités:
- DE-C- 411 421
- DE-C- 861 969
- GB-A- 2 275 454
- US-A- 2 806 622

## Description

L'invention se rapporte à un dispositif antibruit pour réservoir à carburant de véhicule, notamment automobile.

Les manoeuvres de freinage et redémarrage successives d'un véhicule provoquent des translations de la masse de carburant dans le réservoir qui sont perçues par le conducteur sous la forme de bruits avec effet de choc. Ces bruits apparaissent en particulier lorsque le niveau du carburant atteint une fraction de la capacité totale du réservoir.

Il est connu, notamment par le document FR 2 638 127 formant l'état de la technique le plus proche, des réservoirs à carburant comportant des cloisons antibruit rigides rapportées sur le fond du réservoir ou/et sur les parois latérales de ce dernier. II est également connu, par le document FR 2 587 979, des réservoirs dont les parois sont déformées de façon à constituer des nervures de renforcement et/ou des nervures anti-clapotement.

Cependant, on a constaté que ce type de dispositif résout de manière insatisfaisante les problèmes de bruit de clapotement dans le réservoir.

Il est également connu des réservoirs à carburant comportant des cloisons antibruit rigides fixées sur la paroi supérieure du réservoir et associées à une autre paroi rigide fixée sur le fond du réservoir pour créer un effet de chicane. De même, il est connu des cloisons rigides ajourées qui s'étendent sur toute la hauteur du réservoir.

Enfin, le document US-A-2 806 622 décrit un réservoir dans lequel est disposé une plaque support sensiblement horizontale et ajourée. Deux parois verticales de freinage du liquide, respectivement supérieure et inférieure, sont fixées sur la partie médiane de la plaque support.

Cependant, ces dispositifs antibruit ne sont pas plus efficaces pour résoudre les problèmes de bruit de clapotement dans le réservoir.

Un but de la présente invention est de proposer un dispositif antibruit pour réservoir à carburant de véhicule palliant tout ou partie des inconvénients de l'art antérieur relevés ci-dessus.

Ce but est atteint par le fait que le dispositif antibruit pour réservoir à carburant de véhicule, notamment automobile, comporte au moins une cloison située dans le réservoir, la cloison étant flexible, située sensiblement dans la moitié supérieure du réservoir et sensiblement perpendiculaire à la direction privilégiée de déplacement de la masse de carburant dans le réservoir, les dimensions de la cloison dans la direction transversale à celle du déplacement privilégié de la masse de carburant étant inférieures à l'écartement des parois du réservoir situées en vis-à-vis des extrémités de la cloison, pour permettre à la cloison de se déformer en flexion lors des flux et reflux du carburant.

Selon une autre particularité la cloison est située sensiblement dans la partie centrale du réservoir.

Selon une autre particularité, dans le cas d'un réservoir sensiblement parallélépipédique et ayant un axe de symétrie longitudinal sensiblement parallèle à l'axe longitudinal médian du véhicule, la cloison est sensiblement perpendiculaire au fond du réservoir et à l'axe longitudinal médian du véhicule.

Selon une autre particularité les dimensions de la cloison dans une direction perpendiculaire au fond du réservoir sont de l'ordre de la moitié de la hauteur intérieure du réservoir.

Selon une autre particularité les dimensions de la cloison dans la direction transversale à la direction privilégiée de déplacement de la masse de carburant sont inférieures à la l'écartement des parois du réservoir situées en vis-à-vis des extrémités de la cloison d'une valeur de l'ordre de 0,5 à 5 cm et, de préférence, de 1 à 2 cm.

Selon une autre particularité la cloison est fixée sur une partie fixe du réservoir, par au moins un point situé dans la partie médiane de la cloison qui est contenue dans un plan sensiblement perpendiculaire à la fois au fond du réservoir et à la cloison, pour permettre aux deux extrémités libres de la cloison de s'infléchir sous l'action des flux et reflux du carburant.

Selon une autre particularité la cloison est fixée au niveau de sa partie supérieure sur la face supérieure du réservoir ou/et sur un mécanisme de mesure du niveau de carburant ou sur un système de pompage du carburant qui est situé dans le réservoir.

Selon une autre particularité la cloison est fixée au niveau de sa partie inférieure sur la partie supérieure d'un piège à carburant disposé sur le fond du réservoir.

Selon une autre particularité la cloison a une épaisseur de quelques dixièmes de millimètres à quelques millimètres, et de préférence 2 mm.

Selon une autre particularité la cloison flexible est constituée du même matériau que le réservoir.

D'autres caractéristiques et avantages de l'invention apparaîtront à la lecture de la description détaillée qui va suivre, pour la compréhension de laquelle on se reportera aux dessins annexés, dans lesquels:
- les figures 1A et 1B représentent schématiquement en vue de dessus et en coupe, un premier réservoir pourvu du dispositif antibruit selon l'invention, dans un premier mode de réalisation,
- la figure 1C représente schématiquement une vue en coupe et de côté du réservoir des figures 1A et 1B,
- la figure 2A représente schématiquement, en vue de dessus et en coupe, un second réservoir pourvu du dispositif antibruit selon l'invention, dans le premier mode de réalisation,
- la figure 2B représente schématiquement une vue de côté et en coupe du réservoir de la figure 2A,
- la figure 3A représente schématiquement, en vue de dessus et en coupe, un troisième réservoir pourvu du dispositif antibruit selon l'invention, dans un second mode de réalisation,
- la figure 3B représente schématiquement une vue de côté et en coupe du réservoir de la figure 3A,
- la figure 4 représente schématiquement en vue de dessus et en coupe, un réservoir pourvu du dispositif antibruit selon l'invention, dans un autre mode de réalisation.

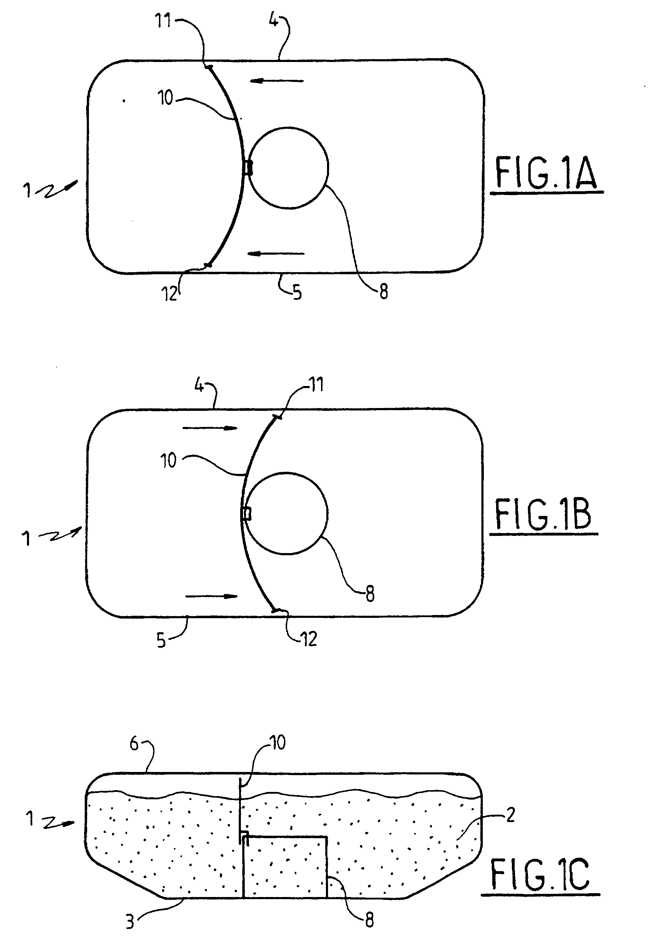

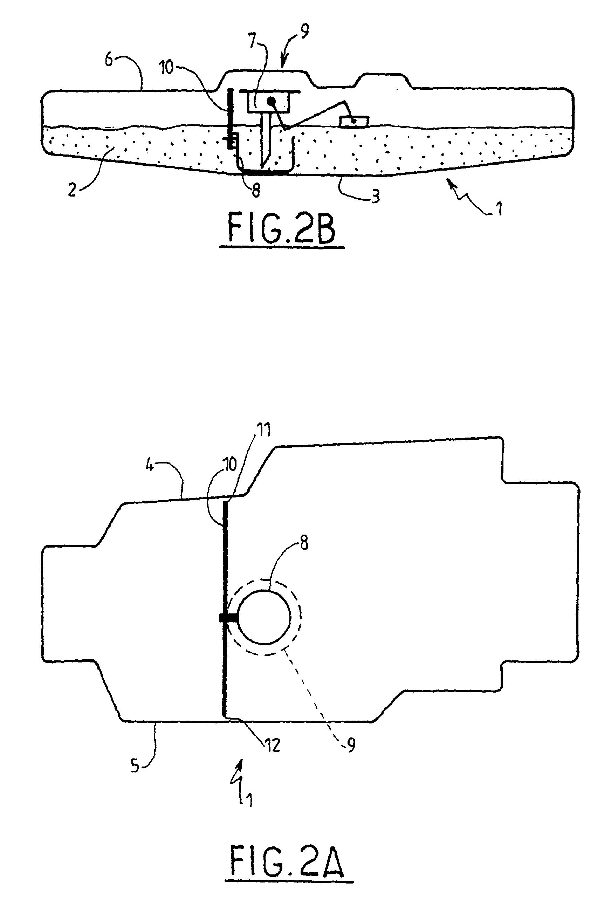

L'invention va à présent être décrite en référence aux figures 1A à 1C, 2A et 2B.

Le dispositif antibruit pour réservoir 1 à carburant 2 de véhicule selon l'invention comporte une cloison 10 flexible située dans le réservoir 1 et destinée à supprimer bruit du clapotement du carburant 2.

Dans l'exemple de réalisation des figures 1A à 1C, 2A et 2B, le réservoir 1 est sensiblement rectangulaire et comporte un piège 8 à carburant disposé sur le fond 3 du réservoir 1. Le piège à carburant 8 est constitué d'une cuvette cylindrique située sensiblement au centre de la paroi constituant le fond 3 du réservoir 1. Dans les exemples de réalisation représentés, les parois latérales 4, 5 les plus longues du réservoir 1, ou parois longitudinales, sont sensiblement parallèles l'axe longitudinal médian (non représenté) du véhicule.

La cloison 10 flexible est fixée par le milieu de son bord inférieur sur le bord supérieur du piège 8 à carburant de façon que la cloison flexible 10 soit sensiblement perpendiculaire au fond 3 et aux parois longitudinales 4, 5 du réservoir 1. Dans les figures 1A à 1C, 2A et 2B la cloison 10 flexible est fixée sur la partie avant du piège 8 à carburant par rapport à l'avant du véhicule. Bien sûr, la cloison 10 flexible peut également être fixée sur la partie arrière du piège 8 à carburant. La cloison 10 flexible est fixée sur le piège 8 à carburant par clipage, rivetage ou tout autre moyen équivalent.

Les dimensions de la cloison 10 flexible dans la direction perpendiculaire aux parois longitudinales 4, 5 sont inférieures à l'écartement de ces parois 4 5 pour permettre à la cloison 10 de se déformer en flexion lors des flux et reflux du carburant 2. Le carburant est ainsi freiné lors de ses translations entre les deux portions du réservoir 1 délimitées par la cloison 10 flexible. Les dimensions de la cloison 10 flexible dans la direction perpendiculaire aux parois longitudinales 4, 5 du réservoir 1 sont inférieures à la l'écartement de ces dernières d'une valeur de l'ordre de 0,5 à 5 cm et, de préférence, de 1 à 2 cm. Les dimensions de la cloison 10 flexible, dans une direction perpendiculaire au fond 3 du réservoir 1, sont, quant à elles, de l'ordre de la moitié de la hauteur intérieur du réservoir 1. L'épaisseur de la cloison 10 flexible peut être comprise entre quelques dixièmes de millimètres et quelques millimètres, et de préférence de l'ordre de 2 mm.

Ainsi, la cloison 10 flexible et située sensiblement dans la partie centrale et dans la moitié supérieure du réservoir 1, les extrémités libres 11, 12 de la cloison 10 pouvant s'infléchir sous l'action des flux et reflux du carburant 2 pour permettre le passage et le freinage de ce dernier.

Cette cloison 10 flexible réduit significativement le bruit dans le réservoir 1, en particulier lorsque le niveau de carburant 2 est supérieur à la moitié de sa capacité. En effet, en freinant la progression du carburant, la cloison diminue le choc provoqué par l'arrivée du carburant en bout de réservoir et diminue la violence de l'impact de la masse de carburant sur la paroi 6 supérieure.

La cloison 10 flexible est réalisée en matière souple apte à une exposition prolongée aux hydrocarbures. De préférence, la cloison 10 flexible peut être réalisée dans le même matériau que le réservoir 1.

La cloison 10 flexible peut, par exemple, être introduite dans le réservoir 1 par le passage 9 de jauge. Il est ainsi possible de fixer cette cloison 10 flexible dans des réservoirs déjà installés sur véhicule. De même, et comme décrits ci-après, la cloison 10 flexible peut être fixée sur la paroi 6 supérieure du réservoir 1, notamment dans le cas où le réservoir ne possède pas de piège 8 à carburant.

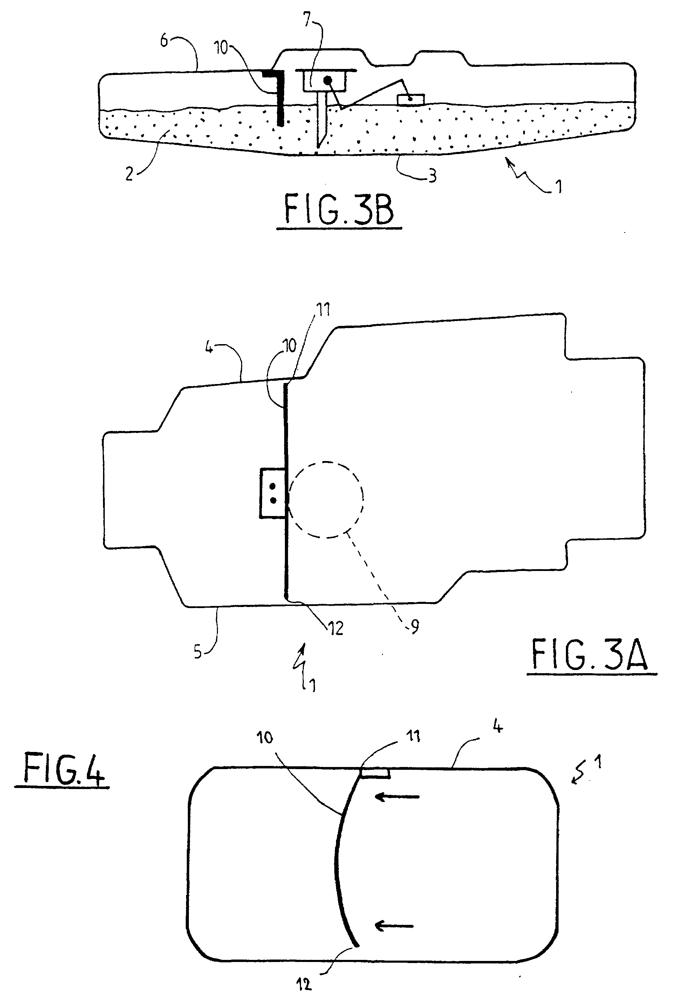

Les figures 3A et 3B illustrent l'application de l'invention à un réservoir 1 ne comportant pas de piège à carburant. Le réservoir 1 des figures 3A et 3B diffère de celui des figures 2A et 2B uniquement par le fait qu'il ne comporte pas de piège à carburant 8. Les éléments identiques à ceux décrits ci-dessus sont désignés par les mêmes références numériques.

Dans l'application des figures 3A et 3B, la cloison 10 flexible est fixée par la partie médiane de son bord supérieur sur la paroi 6 supérieure du réservoir 1. La cloison 10 flexible a les mêmes caractéristiques d'orientation et de dimensions que celles décrites ci-dessus en référence aux figures 2A et 2B pour le réservoir comportant un piège à carburant 8. C'est-à-dire que la cloison 10 flexible et située sensiblement dans la partie centrale et dans la moitié supérieure du réservoir 1 et que les extrémités libres 11, 12 de la cloison 10 peuvent s'infléchir sous l'action des flux et reflux du carburant 2.

La cloison 10 flexible peut être fixée sur la paroi 6 supérieure du réservoir 1 par soudage ou tout autre moyen équivalent. Bien sûr, ce mode de réalisation n'est nullement limitatif. Ainsi, dans une variante non représentée, la cloison 10 flexible peut également être fixée par clipage ou tout autre moyen sur le mécanisme de mesure du niveau de carburant ou sur le système de pompage de ce dernier situé dans le réservoir 1.

On conçoit ainsi aisément que l'on a un dispositif antibruit pour réservoir 1 d'une grande simplicité, peu onéreux, pouvant être adapté facilement sur les réservoirs existants sans nécessiter de changement dans leur structure.

On a constaté également que ce dispositif anti-bruit est particulièrement adapté lorsque le réservoir est placé longitudinalement sous le plancher du véhicule.

Bien sûr, l'invention ne saurait se limiter aux modes de réalisation préférés décrits ci-dessus. Ainsi, bien qu'une seule cloison flexible 10 soit suffisante pour réduire significativement les bruits de clapotement dans le réservoir 1, on peut envisager de disposer plusieurs cloisons 10 flexibles du même type dans le réservoir 1.

De même, il est possible de prévoir que la ou les cloisons 10 flexibles sont rendues solidaires par une première 11 de leurs extrémités d'une paroi 4 longitudinale du réservoir, pour permettre à l'extrémité libre 12 de la cloison de s'infléchir et ainsi freiner le carburant (figure 4).

D'autres modifications à la portée de l'homme du métier entrent dans le cadre de l'invention.

## Revendications

1. Dispositif antibruit pour réservoir (1) à carburant (2) de véhicule, notamment automobile, comportant au moins une cloison (10) située dans le réservoir (1), **caractérisé en ce que** la cloison (10) est flexible et située sensiblement dans la moitié supérieure du réservoir (1) et sensiblement perpendiculaire à la direction privilégiée de déplacement de la masse de carburant (2) dans le réservoir (1), les dimensions de la cloison (10) dans la direction transversale à celle du déplacement privilégié de la masse de carburant (2) étant inférieures à l'écartement des parois (4, 5) du réservoir (1) situées en vis-à-vis des extrémités de la cloison (10), pour permettre à la cloison (10) de se déformer en flexion lors des flux et reflux du carburant (2).

2. Dispositif antibruit pour réservoir (1) à carburant (2) de véhicule selon la revendication 1, **caractérisé en ce que** la cloison (10) est située sensiblement dans la partie centrale du réservoir (1).

3. Dispositif antibruit pour réservoir (1) à carburant (2) de véhicule selon la revendication 1 ou 2 **caractérisé en ce que** dans le cas d'un réservoir (1) sensiblement parallélépipédique et ayant un axe de symétrie longitudinal sensiblement parallèle à l'axe longitudinal médian du véhicule, la cloison (10) est sensiblement perpendiculaire au fond (3) du réservoir (1) et à l'axe longitudinal médian du véhicule.

4. Dispositif antibruit pour réservoir (1) à carburant (2) de véhicule selon l'une quelconque des revendications 1 à 3, **caractérisé en ce que** les dimensions de la cloison (10) dans une direction perpendiculaire au fond (3) du réservoir (1) sont de l'ordre de la moitié de la hauteur intérieure du réservoir (1).

5. Dispositif antibruit pour réservoir (1) à carburant (2) de véhicule selon l'une quelconque des revendications 1 à 4 **caractérisé en ce que** les dimensions de la cloison (10) dans la direction transversale à la direction privilégiée de déplacement de la masse de carburant (2) sont inférieures à l'écartement des parois (4, 5) du réservoir (1) situées en vis-à-vis des extrémités de la cloison (10) d'une valeur de l'ordre de 0,5 à 5 cm et, de préférence, de 1 à 2 cm.

6. Dispositif antibruit pour réservoir (1) à carburant (2) de véhicule selon l'une quelconque des revendications 1 à 5 **caractérisé en ce que** la cloison (10) est fixée sur une partie fixe du réservoir (1), par au moins un point situé dans la partie médiane de la cloison (10) qui est contenue dans un plan sensiblement perpendiculaire à la fois au fond (3) du réservoir (1) et à la cloison (10), pour permettre aux deux extrémités libres (11, 12) de la cloison (10) de s'infléchir sous l'action des flux et reflux du carburant (2).

7. Dispositif antibruit pour réservoir (1) à carburant (2) de véhicule selon la revendication 6 **caractérisé en ce que** la cloison (10) est fixée au niveau de sa partie supérieure sur la face supérieure du réservoir (1) ou/et sur un mécanisme de mesure du niveau de carburant ou sur un système de pompage du carburant qui est situé dans le réservoir (1).

8. Dispositif antibruit pour réservoir (1) à carburant (2) de véhicule selon la revendication 6 **caractérisé en ce que** la cloison (10) est fixée au niveau de sa partie inférieure sur la partie supérieure d'un piège (8) à carburant disposé sur le fond (3) du réservoir (1).

9. Dispositif antibruit pour réservoir (1) à carburant (2) de véhicule selon l'une quelconque des revendications 1 à 5 **caractérisé en ce que** la cloison (10) est rendue solidaire par une (11) de ses extrémités d'une paroi (4) longitudinale du réservoir (1), l'extrémité (12) de la cloison (10) située à l'opposé à celle fixée au réservoir étant libre.

10. Dispositif antibruit pour réservoir (1) à carburant (2) de véhicule selon l'une quelconque des revendications 1 à 9 **caractérisé en ce que** la cloison (10) a une épaisseur de quelques dixièmes de millimètres à quelques millimètres, et de préférence 2 mm.

11. Dispositif antibruit pour réservoir (1) à carburant (2) de véhicule selon l'une quelconque des revendications 1 à 10 **caractérisé en ce que** la cloison (10) flexible est constituée du même matériau que le réservoir (1).

## Claims

1. Anti-noise device for a tank (1) for fuel (2) for a vehicle, particularly a motor vehicle, having at least one partition (10) located inside the tank (1), **characterised in that** the partition (10) is flexible and located substantially in the upper half of the tank (1) and substantially perpendicular to the preferred direction of displacement of the mass of fuel (2) in the tank (1), the dimensions of the partition (10) in the direction transverse to that of the preferred displacement of the mass of fuel (2) being smaller than the distance between the walls (4, 5) of the tank (1), which are located facing the ends of the partition (10), so as to allow the partition (10) to be deformed in deflection as the fuel (2) flows back and forth.

2. Anti-noise device for a tank (1) for fuel (2) for a vehicle according to Claim 1, **characterised in that** the partition (10) is located substantially in the central portion of the tank (1).

3. Anti-noise device for a tank (1) for fuel (2) for a vehicle according to Claim 1 or 2 **characterised in that**, in the case of a substantially parallelepipedal tank (1) having a longitudinal axis of symmetry that is substantially parallel to the median longitudinal axis of the vehicle, the partition (10) is substantially perpendicular to the bottom (3) of the tank (1) and to the median longitudinal axis of the vehicle.

4. Anti-noise device for a tank (1) for fuel (2) for a vehicle according to any one of Claims 1 to 3, **characterised in that** the dimensions of the partition (10) in a direction perpendicular to the bottom (3) of the tank (1) are of the order of half the intemal height of the tank (1).

5. Anti-noise device for a tank (1) for fuel (2) for a vehicle according to any one of Claims 1 to 4 **characterised in that** the dimensions of the partition (10) in the direction transverse to the preferred direction of displacement of the mass of fuel (2) are smaller than the distance between the walls (4, 5) of the tank (1) that are located facing the ends of the partition (10) by a value of the order of 0.5 to 5 cm and, preferably, 1 to 2 cm.

6. Anti-noise device for a tank (1) for fuel (2) for a vehicle according to any one of Claims 1 to 5 **characterised in that** the partition (10) is fixed to a fixed portion of the tank (1) by at least one point located in the median portion of the partition (10), which is contained within a plane substantially perpendicular both to the bottom (3) of the tank (1) and to the partition (10), to allow the two free ends (11, 12) of the partition (10) to bend under the back-and-forth action of the fuel (2).

7. Anti-noise device for a tank (1) for fuel (2) for a vehicle according to Claim 6 **characterised in that** the partition (10) is fixed, in its upper portion, to the upper face of the tank (1) or/and to a fuel level measurement mechanism or to a fuel pumping system located inside the tank (1).

8. Anti-noise device for a tank (1) for fuel (2) for a vehicle according to Claim 6 **characterised in that** the partition (10) is fixed, at its lower portion, to the upper portion of a fuel trap (8) arranged on the bottom (3) of the tank (1).

9. Anti-noise device for a tank (1) for fuel (2) for a vehicle according to any one of Claims 1 to 5 **characterised in that** the partition (10) is made integral by one (11) of its ends to a longitudinal wall (4) of the tank (1), the end (12) of the partition (10) located opposite that fixed to the tank being free.

10. Anti-noise device for a tank (1) for fuel (2) for a vehicle, according to any one of Claims 1 to 9 **characterised in that** the partition (10) has a thickness of a few tenths of a millimetre to a few millimetres, and preferably 2 mm.

11. Anti-noise device for a tank (1) for fuel (2) for a vehicle according to any one of Claims 1 to 10 **characterised in that** the flexible partition (10) is constituted by the same material as the tank (1).

## Patentansprüche

1. Vorrichtung zur Geräuschminderung für den Kraftstofftank (1, 2) eines Fahrzeugs, insbesondere eines Kraftfahrzeugs, mit mindestens einer Zwischenwand (10) im Tank (1), **dadurch gekennzeichnet, dass** die Zwischenwand (10) flexibel und im Wesentlichen in der oberen Hälfte des Tanks (1) und im Wesentlichen senkrecht zur bevorzugten Bewegungsrichtung der Masse des Kraftstoffs (2) im Tank (1) angeordnet ist, wobei die Abmessungen der Zwischenwand (10) quer zur bevorzugten Bewegungsrichtung der Masse des Kraftstoffs (2) kleiner sind als der Abstand zwischen den Wänden (4, 5) des Tanks (1), die den Enden der Zwischenwand (10) gegenüberliegen, damit sich die Zwischenwand (10) beim Fließen und Rückfließen des Kraftstoffs (2) verbiegen kann.

2. Vorrichtung zur Geräuschminderung für den Kraftstofftank (1, 2) eines Fahrzeugs nach Anspruch 1, **dadurch gekennzeichnet, dass** die Zwischenwand (10) im Wesentlichen im mittleren Abschnitt des Tanks (1) gelegen ist.

3. Vorrichtung zur Geräuschminderung für den Kraftstofftank (1, 2) eines Fahrzeugs nach Anspruch 1 oder 2, **dadurch gekennzeichnet, dass** im Fall eines im Wesentlichen parallelepipedförmigen Tanks (1) mit einer Längssymmetrieachse, die im Wesentlichen parallel zur Längsmittelachse des Fahrzeugs verläuft, sich die Zwischenwand (10) im Wesentlichen senkrecht zum Boden (3) des Tanks (1) und zur Längsmittelachse des Fahrzeugs erstreckt.

4. Vorrichtung zur Geräuschminderung für den Kraftstofftank (1, 2) eines Fahrzeugs nach einem der Ansprüche 1 bis 3, **dadurch gekennzeichnet, dass** die Abmessungen der Zwischenwand (10) in einer zum Boden (3) des Tanks (1) senkrechten Richtung in etwa der halben Innenhöhe des Tanks (1) entsprechen.

5. Vorrichtung zur Geräuschminderung für den Kraftstofftank (1, 2) eines Fahrzeugs nach einem der Ansprüche 1 bis 4, **dadurch gekennzeichnet, dass** die Abmessungen der Zwischenwand (10) quer zur bevorzugten Bewegungsrichtung der Masse an Kraftstoff (2) um einen Wert in der Größenordnung von 0,5 bis 5 cm und vorzugsweise zwischen 1 und 2 cm kleiner sind als der Abstand zwischen den Wänden (4, 5) des Tanks (1), die den Enden der Zwischenwand (10) gegenüberliegen.

6. Vorrichtung zur Geräuschminderung für den Kraftstofftank (1, 2) eines Fahrzeugs nach einem der Ansprüche 1 bis 5, **dadurch gekennzeichnet, dass** die Zwischenwand (10) an einem festen Abschnitt des Tanks (1) an mindestens einem im mittleren Teil der Zwischenwand (10) gelegenen Punkt befestigt ist, wobei der Abchnitt in einer Ebene enthalten ist, die im Wesentlichen senkrecht zum Boden (3) des Tanks (1) und zugleich zur Wand (10) verläuft, damit sich die beiden freien Enden (11, 12) der Zwischenwand (10) unter Einwirkung von Fließen und Rückfließen des Kraftstoffs (2) biegen können.

7. Vorrichtung zur Geräuschminderung für den Kraftstofftank (1, 2) eines Fahrzeugs nach Anspruch 6, **dadurch gekennzeichnet, dass** die Zwischenwand (10) an ihrem oberen Abschnitt an der Oberseite des Tanks (1) und/oder an einem Mechanismus zum Messen des Kraftstoffpegels oder an einem Kraftstoff-Pumpsystem befestigt ist, das im Tank (1) gelegen ist.

8. Vorrichtung zur Geräuschminderung für den Kraftstofftank (1, 2) eines Fahrzeugs nach Anspruch 6, **dadurch gekennzeichnet, dass** die Zwischenwand (10) an ihrem unteren Abschnitt am oberen Abschnitt einer am Boden (3) des Tanks (1) angeordneten Kraftstoff-Falle (8) befestigt ist.

9. Vorrichtung zur Geräuschminderung für den Kraftstofftank (1, 2) eines Fahrzeugs nach einem der Ansprüche 1 bis 5, **dadurch gekennzeichnet, dass** die Zwischenwand (10) an einem (11) ihrer Enden mit einer Längswand (4) des Tanks (1) fest verbunden ist, wobei das dem am Tank befestigten Ende gegenüberliegende Ende (12) der Zwischenwand (10) frei ist.

10. Vorrichtung zur Geräuschminderung für den Kraftstofftank (1, 2) eines Fahrzeugs nach einem der Ansprüche 1 bis 9, **dadurch gekennzeichnet, dass** die Zwischenwand (10) einige Zehntel Millimeter bis einige Millimeter, vorzugsweise 2 mm, dick ist.

11. Vorrichtung zur Geräuschminderung für den Kraftstofftank (1, 2) eines Fahrzeugs nach einem der Ansprüche 1 bis 10, **dadurch gekennzeichnet, dass** die Zwischenwand (10) flexibel ist und aus dem gleichen Material besteht wie der Tank (1).
